# EUROPEAN PATENT APPLICATION

(11) **EP 4 765 717 A1**
(43) Date of publication of application: **24.06.2026**
(21) Application number: 25212362.5
(22) Date of filing: 30.10.2025
(51) Int. Cl.: H04L 9/00, H04L 9/40, H04L 9/08

(54) **KEY MANAGEMENT DEVICE, QUANTUM CRYPTOGRAPHY COMMUNICATION SYSTEM, KEY MANAGEMENT METHOD, AND COMPUTER-READABLE MEDIUM**

(30) Priority: 18.12.2024 JP 2024221591
(71) Applicant: KABUSHIKI KAISHA TOSHIBA, Kawasaki-shi, Kanagawa, 212-0013 (JP); Toshiba Digital Solutions Corporation, Kawasaki-shi, Kanagawa 212-0013 (JP)
(72) Inventor: NAGASHIMA, Yuki, Kawasaki-shi (JP); IMAEDA, Takaaki, Kawasaki-shi (JP)
(74) Representative: Marks & Clerk LLP

(57) **Abstract**

According to an arrangement, a key management device (20) includes a generation unit (203), a packet processing unit (207), and an inter-node relay unit (209). The generation unit (203) is configured to generate a first global key based on a first random number. The packet processing unit (207) is configured to add, to a first packet including the first global key, first path information indicating a relay path for the first packet. The inter-node relay unit (209) is configured to encrypt the first packet with a local key shared with a different node and transmit the encrypted first packet to the different node.

## Description

### FIELD

The present disclosure relates to a key management device, a quantum cryptography communication system, a key management method, and a computer-readable medium.

### BACKGROUND

A quantum cryptography communication control device that can guarantee quality of service (QoS) originally expected by an application is conventionally known. In addition, a network routing technique for controlling a flow of communication of a packet between communication network nodes is conventionally known.

### BRIEF DESCRIPTION OF THE DRAWINGS

Fig. 1 is a diagram illustrating an example of a configuration of a quantum cryptography communication system according to an arrangement;
Fig. 2 is an example of a network configuration according to the arrangement;
Fig. 3 is a diagram illustrating an example of a functional configuration of a key management device according to the arrangement;
Fig. 4 is a diagram illustrating an example of global key information stored in a key storage unit according to the arrangement;
Fig. 5 is a diagram illustrating an example of flow information stored in a flow information storage unit according to the arrangement;
Fig. 6 is a diagram illustrating an example of path information stored in a path information storage unit according to the arrangement;
Fig. 7 is a diagram illustrating an example of link information stored in a link information storage unit according to the arrangement;
Fig. 8 is a diagram illustrating an example of a packet according to the arrangement;
Fig. 9 is a flowchart illustrating a process flow of a key management device on a transmitting side;
Fig. 10 is a flowchart illustrating a process flow of a key management device on a receiving side;
Fig. 11 is a diagram illustrating an example of a pair of applications that perform encrypted communication in the arrangement;
Fig. 12A is a diagram illustrating a first example of a relay path for a global key used in the pair of applications illustrated in Fig. 11;
Fig. 12B is a diagram illustrating an example of path information corresponding to the relay path illustrated in Fig. 12A;
Fig. 12C is a diagram illustrating an example of a path control header corresponding to the path information illustrated in Fig. 12B;
Fig. 13A is a diagram illustrating a second example of the relay path for the global key used in the pair of applications illustrated in Fig. 11;
Fig. 13B is a diagram illustrating an example of path information corresponding to the relay path illustrated in Fig. 13A;
Fig. 13C is a diagram illustrating an example of a path control header corresponding to the path information illustrated in Fig. 13B;
Fig. 14 is a diagram illustrating a routing table necessary for relaying a key as illustrated in Fig. 12A by a general method; and
Fig. 15 is a diagram illustrating an example of a hardware configuration of the key management device according to the arrangement.

### DETAILED DESCRIPTION

According to an arrangement, a key management device includes a generation unit, a packet processing unit, and an inter-node relay unit. The generation unit is configured to generate a first global key based on a first random number. The packet processing unit is configured to add, to a first packet including the first global key, first path information indicating a relay path for the first packet. The inter-node relay unit is configured to encrypt the first packet with a local key shared with a different node and transmit the encrypted first packet to the different node.

Hereinafter, arrangements of a key management device, a quantum cryptography communication system, a key management method, and a program will be described in detail with reference to the accompanying drawings.

First, an example of a configuration of a quantum cryptography communication system 1 according to an arrangement will be described.

### Example of Configuration

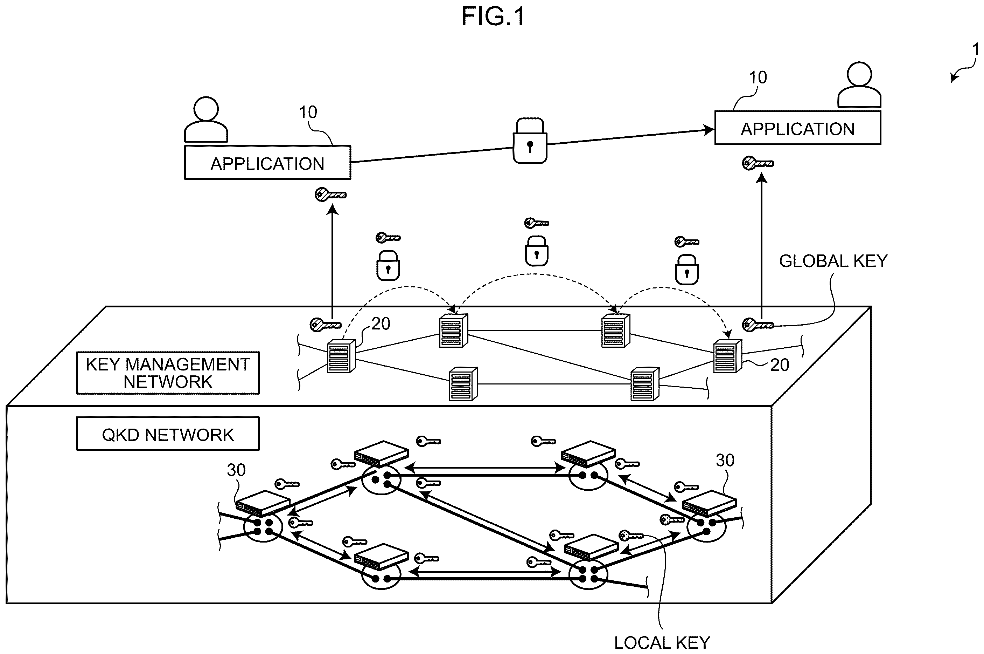

Fig. 1 is a diagram illustrating the example of the configuration of the quantum cryptography communication system 1 according to the arrangement. The quantum cryptography communication system 1 according to the arrangement includes an application 10, a key management device 20, and a quantum key distribution (QKD) device 30.

The application 10 operates in an information processing apparatus belonging to a user network.

The key management device 20 belongs to a key management network including a plurality of key management devices 20.

The QKD device 30 belongs to a QKD network including a plurality of QKD devices 30.

As illustrated in Fig. 1, the key management network and the QKD network correspond to each other, and a connection relationship (topology) of a link of the key management network is the same as a connection relationship of a link of the QKD network.

For example, the key management device 20 and the QKD device 30 are accommodated in a trusted node to which a security measure is applied in each base. Hereinafter, the "trusted node" is simply referred to as a "node".

In the QKD network, in order to forward a secret key (hereinafter referred to as a "global key") used by the application 10 for encryption of communication between the key management devices 20, it is necessary to encrypt the global key by using a secret key (hereinafter referred to as a "local key") between the key management devices 20. However, in order to forward the global key to a remote key management device 20 that does not have a direct link, it is necessary to send the global key in a relay format via a plurality of key management devices 20.

The key management device 20 receives the local key from the QKD device 30. Each of the key management devices 20 creates a tunnel that transparently encrypts an IP packet (hereinafter simply referred to as a "packet") using a local key along a link between the key management devices 20, and forwards the packet toward a target key management device 20 through each tunnel. As a result, the global key can be transmitted and received as direct IP communication between the key management device 20 at the start point and the key management device 20 at the destination point, and there is an advantage that an existing technology for an IP network can be utilized. For example, in combination with a transport layer security (TLS) protocol, it is possible to send the global key in an end-to-end encrypted state from the key management device 20 at the start point to the key management device 20 at the destination point.

The global key shared between the key management device 20 at the start point and the key management device 20 at the destination point is provided from each of the key management devices 20 at the start point and at the destination point to the application 10.

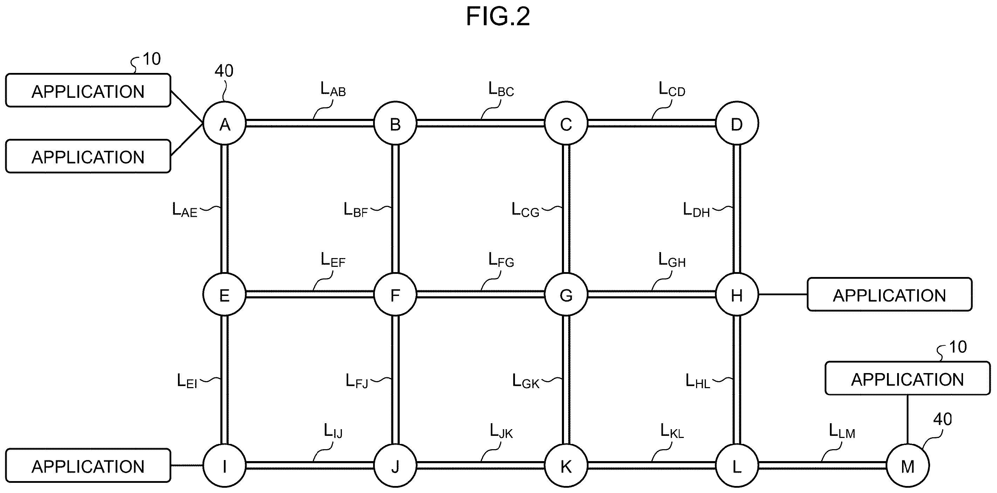

Fig. 2 illustrates an example of a network configuration according to the arrangement. Each of nodes 40 includes a key management device 20 and a QKD device 30. In the example illustrated in Fig. 2, the nodes 40 are represented by A to M.

The QKD device 30 accommodated in each of the nodes 40 is connected to the QKD device 30 accommodated in the adjacent node 40 through an optical fiber line, and this line is referred to as a QKD link (L_{AB} to L_{LM}).

The QKD device 30 accommodated in each of the nodes 40 shares a local key (quantum-key) using a quantum key distribution protocol such as BB84 in units of QKD links. As a result, encrypted communication using a common key encryption method with the local key can be performed in units of the QKD links.

Subsequently, the global key is shared among the key management devices 20 of the respective nodes 40. The global key is a common key provided to the application 10 or the like outside the quantum key management network. The global key is generated from a random number in a node 40 serving as a key generation source. A packet including the global key includes, as metadata, order information of the QKD links used before reaching a node 40 serving as a key sharing destination.

Further, each of the nodes 40 forwards the global key to the next forward destination node 40 according to the order information. Therefore, the global key is transmitted by the relay method while being encrypted with the local key unique to each QKD link, and reaches the node 40 serving as the sharing destination.

The global key that has reached the final destination node 40 is stored in the key management device 20 in the node 40 in order for the global key to be provided to the external application 10 or the like, and the sharing of the global key between the key management device 20 that has generated the global key and the key management device 20 that is the sharing destination is completed.

### Example of Functional Configuration of Key Management Device

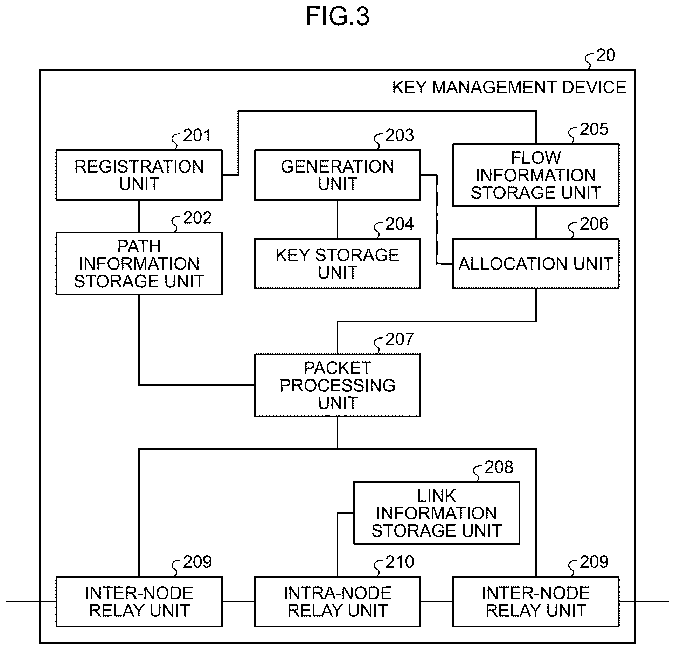

Fig. 3 is a diagram illustrating an example of a functional configuration of the key management device 20 according to the arrangement. The key management device 20 according to the arrangement includes a registration unit 201, a path information storage unit 202, a generation unit 203, a key storage unit 204, a flow information storage unit 205, an allocation unit 206, a packet processing unit 207, a link information storage unit 208, an inter-node relay unit 209, and an intra-node relay unit 210.

The registration unit 201 registers, in the path information storage unit 202, path information indicating a path to be used when a global key generated by the generation unit 203 is sent to another key management device 20, and registers, in the flow information storage unit 205, flow information indicating a condition to be used for identifying a flow of a packet including the global key.

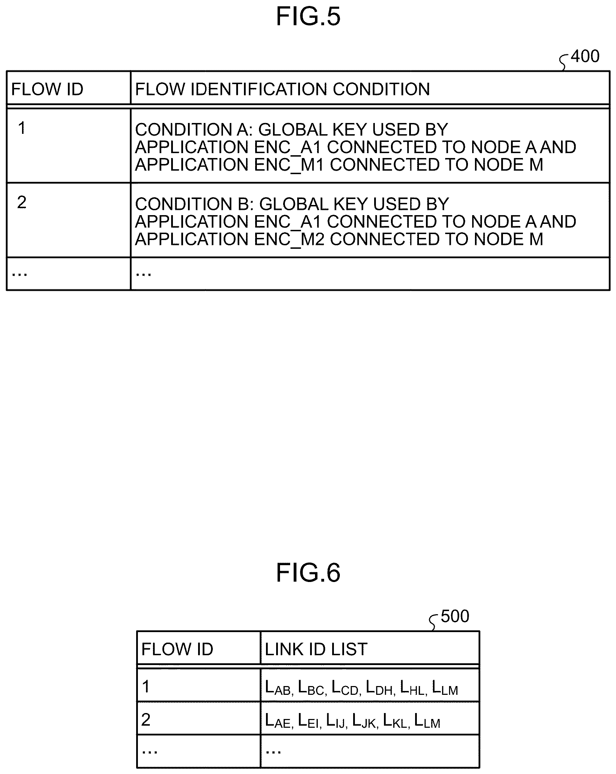

The path information storage unit 202 stores the path information. The path information will be described later in detail with reference to Fig. 6.

The generation unit 203 generates a random number and generates the global key from the random number. The generation unit 203 stores global key information indicating information of the generated global key into the key storage unit 204. In addition, the generation unit 203 inputs the global key information into the allocation unit 206.

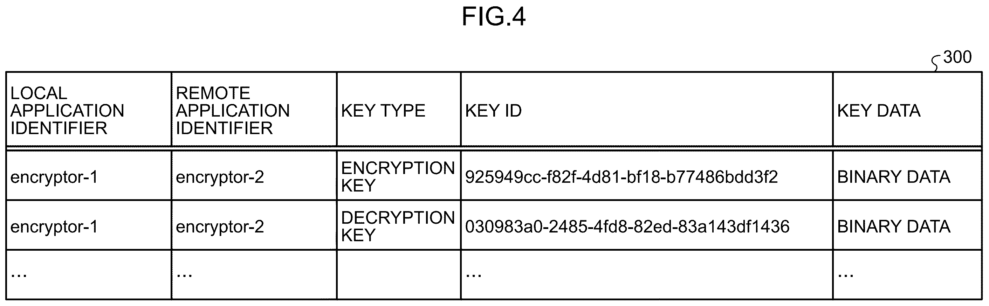

The key storage unit 204 stores the global key information of the global key generated by the generation unit 203 and global key information of a global key (a global key received from another node 40) generated by the key management device 20 of the other node 40. The global key information will be described later in detail with reference to Fig. 4.

In addition, the key storage unit 204 stores local key information shared with the key management device 20 of the adjacent node 40. The local key information includes a link ID, a local key ID, and local key data. The link ID is identification information for identifying a QKD link. The local key ID is identification information for identifying a local key. The local key data is binary data indicating the local key.

The flow information storage unit 205 stores the flow information. The flow information will be described later in detail with reference to Fig. 5.

The allocation unit 206 refers to the flow information storage unit 205 and allocates the flow ID to the global key information input from the generation unit 203. Specifically, the allocation unit 206 allocates the flow ID for identifying a communication flow of a packet to the global key for each pair of applications 10 that use the global key for encryption or decryption of data. The allocation unit 206 inputs the global key information and the flow ID to the packet processing unit 207.

The packet processing unit 207 generates a packet including the global key information. Specifically, the packet processing unit 207 refers to the flow ID input from the allocation unit 206, and reads path information associated with the flow ID from the path information storage unit 202. The packet processing unit 207 writes the path information associated with the flow ID to a path control header of the packet. The packet processing unit 207 inputs the packet to the inter-node relay unit 209.

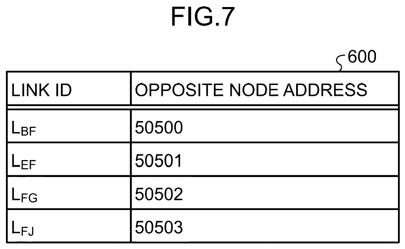

The link information storage unit 208 stores link information indicating a correspondence between the QKD link ID for identifying the QKD link and the inter-node relay unit 209. The link information will be described later in detail with reference to Fig. 7.

The inter-node relay unit 209 is connected to the key management device 20 of the adjacent node and transmits and receives (relays) packets. The example illustrated in Fig. 3 illustrates a case where two adjacent nodes are present. The inter-node relay unit 209 establishes an encrypted communication channel with the key management device 20 of the adjacent node, and transmits and receives a packet generated by the packet processing unit 207.

For example, the inter-node relay unit 209 encrypts the packet with a local key shared by QKD with the other node 40, and transmits the encrypted packet to the other node 40. Further, for example, when receiving, from the other node 40, an encrypted packet including the global key and a path control header (path information) indicating a relay path for the packet, the inter-node relay unit 209 decrypts the packet with the local key.

The intra-node relay unit 210 forwards the packet input from the inter-node relay unit 209 to the other inter-node relay unit 209 in accordance with the path control header of the packet.

Fig. 4 is a diagram illustrating an example of global key information 300 stored in the key storage unit 204 according to the arrangement. The global key information 300 includes at least a local application identifier, a remote application identifier, a key type, a key ID, and key data.

The local application is identification information for identifying the application 10 connected to the key management device 20.

The remote application identifier is identification information for identifying an application 10 connected to a key management device 20 of a remote node.

The key type is information indicating either an encryption key or a decryption key.

The key ID is identification information for uniquely identifying the global key (binary data).

The key data is binary data indicating the global key.

Fig. 5 is a diagram illustrating an example of flow information 400 stored in the flow information storage unit 205 according to the arrangement. The flow information 400 includes a flow ID and a flow identification condition.

The flow ID is identification information for identifying a flow.

The flow identification condition is a condition used to identify the flow of a packet including the global key. In the example illustrated in Fig. 4, a condition including a combination of two applications 10 using the global key is registered as the flow identification condition.

Fig. 6 is a diagram illustrating an example of path information 500 stored in the path information storage unit 202 according to the arrangement. The path information 500 includes a flow ID and a link ID list.

The path information 500 in Fig. 6 is an example of path information (information of a path starting from A) stored in the key management device 20 accommodated in the node 40 denoted by A in Fig. 2 described above.

The flow ID is identification information for identifying a flow. For example, the flow ID is used as a foreign key for association with the flow information 400.

The link ID list indicates the order of links from the start point to the end point included in a key relay path to the key management device 20 accommodated in the node 40 at the destination point. Since the connection relationship of the key management network and the connection relationship of the QKD network correspond to 1:1, the order of the links from the start point to the end point included in the key relay path is managed based on the order information of the QKD links included in the QKD network.

In a case where a plurality of key sharing paths are used between the key management device 20 of the node 40 at the start point and the key management device 20 of the node 40 at the end point, multiple path information 500 is defined by a plurality of flow IDs. In addition, in the flow information 400 illustrated in Fig. 5, each of the plurality of flow IDs and each of pairs of applications 10 are stored in association with each other.

As a result, when the key management device 20 shares the global key with the other key management devices 20, the allocation unit 206 allocates the flow ID to the global key, so that the global key can be shared in different paths for each application 10 serving as a use destination of the global key.

Fig. 7 is a diagram illustrating an example of link information 600 stored in the link information storage unit 208 according to the arrangement. The link information 600 includes a link ID and a destination node address.

The link information 600 in Fig. 7 is an example of the link information stored in the key management device 20 of the node 40 denoted by F in Fig. 2 described above.

The link ID is identification information for identifying the QKD link connected to the QKD device 30 of each node 40.

The destination node address indicates an address of the node 40 accommodating the opposite QKD device 30 connected to the QKD link.

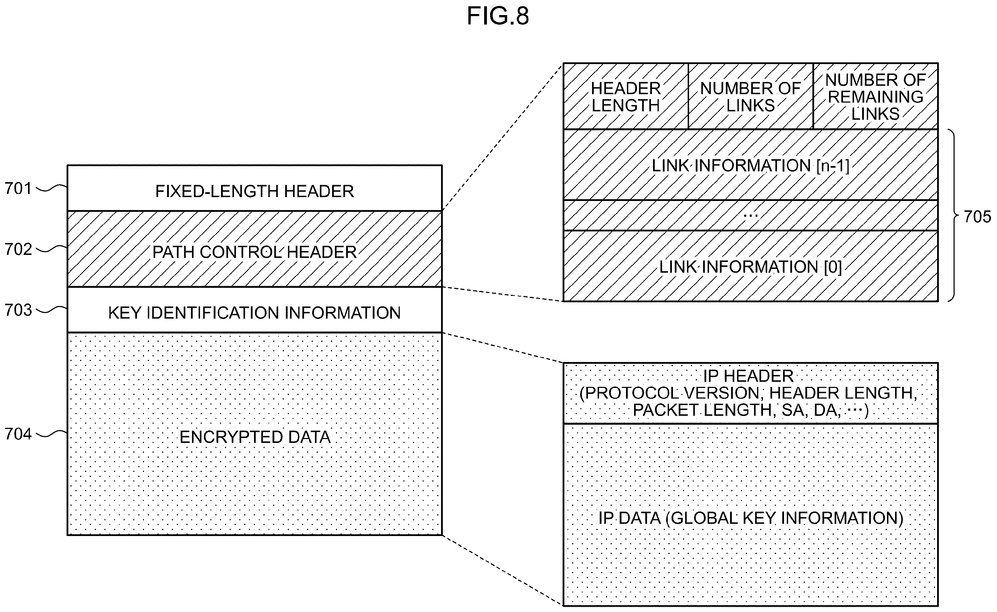

Fig. 8 is a diagram illustrating an example of the packet according to the arrangement. The packet processing unit 207, the inter-node relay unit 209, and the intra-node relay unit 210 generate or analyze a packet (communication frame) as illustrated in Fig. 8, and forward or store the packet as a global key.

A fixed-length header 701 is unique data for determining the content of the packet.

A path control header 702 is information added to the packet in order to relay the global key according to the arrangement. The path control header 702 includes a header length, the number of links, the number of remaining links (an initial value is equal to the number of links), and link information 705. The header length represents the size of the path control header 702. The number of links represents the size of a link array (link information 705). The number of remaining links represents a position in the link array. The link information 705 is the array in which link IDs in the link ID list are arranged in reverse order.

Key identification information 703 is written when encryption using a local key is performed by the inter-node relay unit 209. For example, the key identification information 703 is identification information for identifying the local key used for encryption. For example, the key identification information 703 is used to identify a decryption key (the same common key as an encryption key) for decrypting encrypted data 704.

The encrypted data 704 includes the global key information 300 (the local application identifier, the remote application identifier, the key type, the key ID, and the key data) encrypted with the local key.

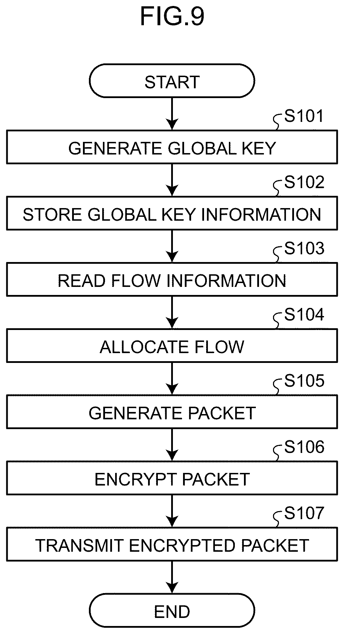

Fig. 9 is a flowchart illustrating a process flow of the key management device 20 on the transmitting side. First, the generation unit 203 generates a random number and generates a global key from the random number (Step S101). For example, the generation processing in Step S101 is executed in response to a request to generate the global key from the application 10.

Next, the generation unit 203 stores global key information 300 of the global key generated in Step S101 to the key storage unit 204 (Step S102).

Next, the allocation unit 206 reads the flow information 400 from the flow information storage unit 205 (Step S103). The flow information 400 read in Step S103 is selected according to the application 10 that has requested the generation of the global key.

Next, the allocation unit 206 allocates the flow ID of the flow information 400 read in Step S103 to the global key generated in Step S101 (Step S104).

Next, the packet processing unit 207 generates a packet including the global key information 300 stored in Step S102 (Step S105). Specifically, for example, the packet processing unit 207 acquires path information 500 associated with the flow information 400 allocated in Step S104 from the path information storage unit 202, and adds a path control header 702 including the path information 500 to the packet.

Next, the inter-node relay unit 209 encrypts the packet generated in Step S105 (Step S106). Specifically, the inter-node relay unit 209 encrypts the global key information 300 included in the packet generated in Step S105 using the local key.

Next, the inter-node relay unit 209 forwards the packet encrypted in Step S106 to the key management device 20 of the opposite node 40 (Step S107).

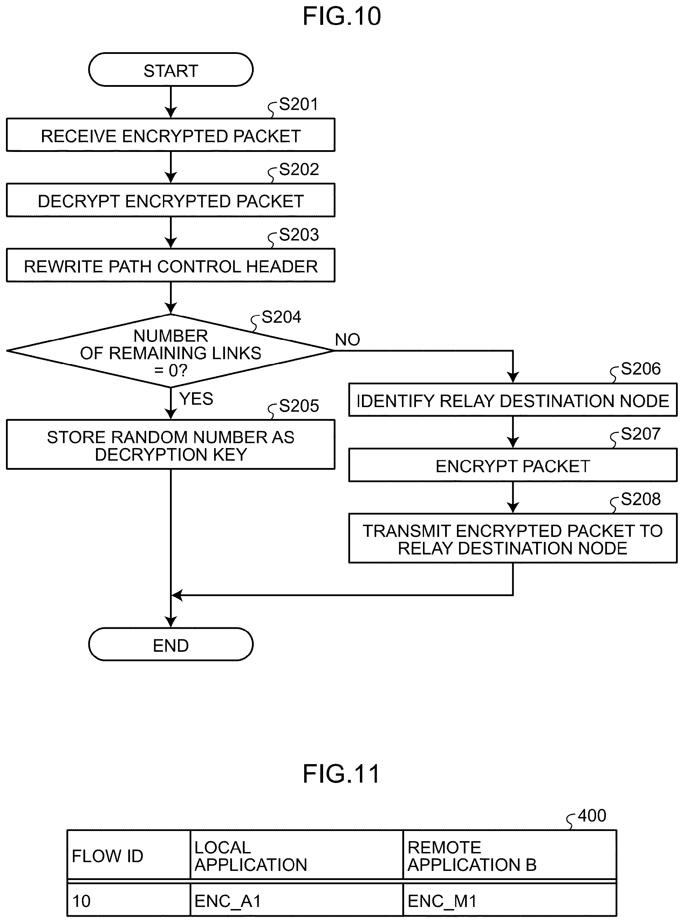

Fig. 10 is a flowchart illustrating a process flow of the key management device 20 on the receiving side. First, the inter-node relay unit 209 receives the encrypted packet from the key management device 20 of the opposite node 40 (Step S201).

Next, the inter-node relay unit 209 decrypts the encrypted packet received in Step S201 (Step S202). The inter-node relay unit 209 identifies the local key used as a decryption key (the same common key as the encryption key) from key identification information included in the encrypted packet, and acquires the local key from the key storage unit 204. Then, the inter-node relay unit 209 decrypts the encrypted packet (encrypted data 704) with the local key and obtains the global key information 300 (the local application identifier, the remote application identifier, a key type, the key ID, and the key data).

Next, the inter-node relay unit 209 rewrites the path control header 702 (Step S203). Specifically, the inter-node relay unit 209 decrements the number of remaining links in the path control header 702 of the encrypted packet. Note that the number of remaining links decreases every time the packet is relayed between nodes, and becomes 0 when the packet reaches the final destination node 40.

Next, the intra-node relay unit 210 determines whether the number of remaining links in the path control header 702 is 0 (Step S204).

If the number of remaining links is 0 (Step S204, Yes), the intra-node relay unit 210 stores the key data (random number) included in the global key information 300 obtained in Step S202 to the key storage unit 204 as the decryption key (Step S205).

If the number of remaining links is not 0 (Step S204, No), the intra-node relay unit 210 identifies a relay destination node 40 (Step S206). Specifically, the intra-node relay unit 210 regards the number obtained by subtracting the "number of remaining links" from the "number of links" included in the path control header 702 as a subscript of an array of "link information", identifies the next link, and reads the link information 600 corresponding to the next link from the link information storage unit 208. The intra-node relay unit 210 identifies the relay destination node 40 based on the opposite node address of the link information 600. Then, the intra-node relay unit 210 relays the packet to the inter-node relay unit 209 corresponding to the relay destination node 40.

Next, the inter-node relay unit 209 encrypts the packet (global key information 300) with the local key corresponding to the relay destination node 40 (Step S207).

Next, the inter-node relay unit 209 transmits the encrypted packet to the relay destination node 40 (Step S208).

Thereafter, the key management device 20 of the next node 40 repeats the processing in S201 to S208 until the packet reaches the final destination node 40 and the number of remaining links becomes 0.

### Example of Specific Process

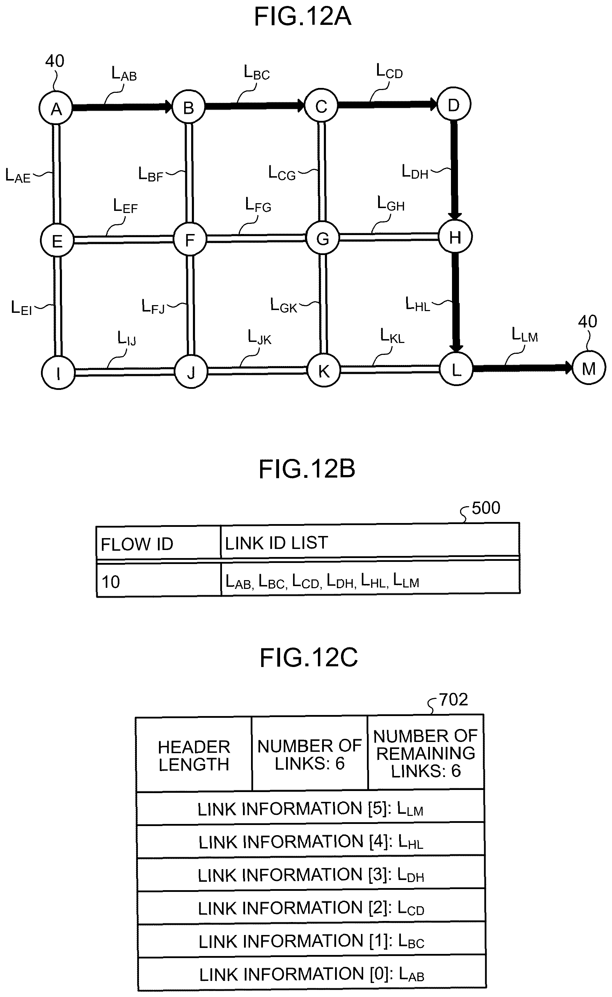

Fig. 11 is a diagram illustrating an example of a pair of applications 10 that perform encrypted communication in the arrangement. Fig. 12A is a diagram illustrating a first example of a relay path for a global key used in the pair of applications 10 illustrated in Fig. 11.

The local application (ENC_A1) is connected to the key management device 20 of the node 40 denoted by A in Fig. 12A. The global key used by the local application (ENC_A1) is provided from the key management device 20 of the node 40 denoted by A in Fig. 12A.

The remote application (ENC_M1) communicates with the key management device 20 of the node 40 denoted by M in Fig. 12A. The global key used by the remote application (ENC_M1) is provided from the key management device 20 of the node 40 denoted by M in Fig. 12A.

Fig. 12B is a diagram illustrating an example of path information 500 corresponding to the relay path illustrated in Fig. 12A. First, in the key management device 20 of the node 40 denoted by A, a trigger (for example, a request to generate the global key from ENC_A1 to the key management device 20, or the like) for generating the global key between ENC_A1 and ENC_M1 is activated.

Then, the key management device 20 of the node 40 denoted by A refers to the path information 500 illustrated in Fig. 12B and sets a path control header 702 illustrated in Fig. 12C in a packet. Then, the key management device 20 of the node 40 denoted by A starts communication with the key management device 20 of the node 40 denoted by M.

Fig. 12C is a diagram illustrating an example of the path control header 702 corresponding to the path information 500 illustrated in Fig. 12B. The key management device 20 of the node 40 denoted by A transmits the packet in which the path control header 702 illustrated in Fig. 12C is set.

In this case, since (the number of links) - (the number of remaining links) = 6 - 6 = 0, the value of the link information , that is, "L_{AB}" becomes the next link. Therefore, the packet is forwarded to the node 40 denoted by B through the L_{AB}.

The packet is encrypted by the key management device 20 of the node 40 denoted by A using a local key shared between the nodes 40 denoted by A and B. The encrypted packet is decrypted by the key management device 20 of the node 40 denoted by B using the local key shared between the nodes 40 denoted by A and B.

Subsequently, the key management device 20 of the node 40 denoted by B analyzes the path control header 702 of the packet, and decrements the value of the number of remaining links (rewrites the value with one smaller value). In this case, since (the number of links) - (the number of remaining links) = 6 - 5 = 1, the value of the link information , that is, "L_{BC}" becomes the next link. Therefore, the packet is forwarded to the node 40 denoted by C through the L_{BC}.

The above-described operation is repeatedly performed, and the packet is forwarded to the node 40 denoted by M. When the key management device 20 of the node 40 denoted by M decrements the number of remaining links of the path control header 702 of the packet, the number of remaining links becomes 0. Since the number of remaining links = 0 indicates that the packet has reached the node 40 at the destination point, the key management device 20 of the node 40 denoted by M extracts the global key information 300 from the encrypted data 704 and processes a received response and the received data.

Note that the information included in the encrypted data 704 may include information other than the global key information 300. The global key information 300 included in the encrypted data 704 is stored in the key storage unit 204.

By repeating the above-described series of steps, the global key for the pair of applications 10 (ENC_A1 and ENC_M1) is accumulated in the key management devices 20 of the nodes 40 denoted by A and M.

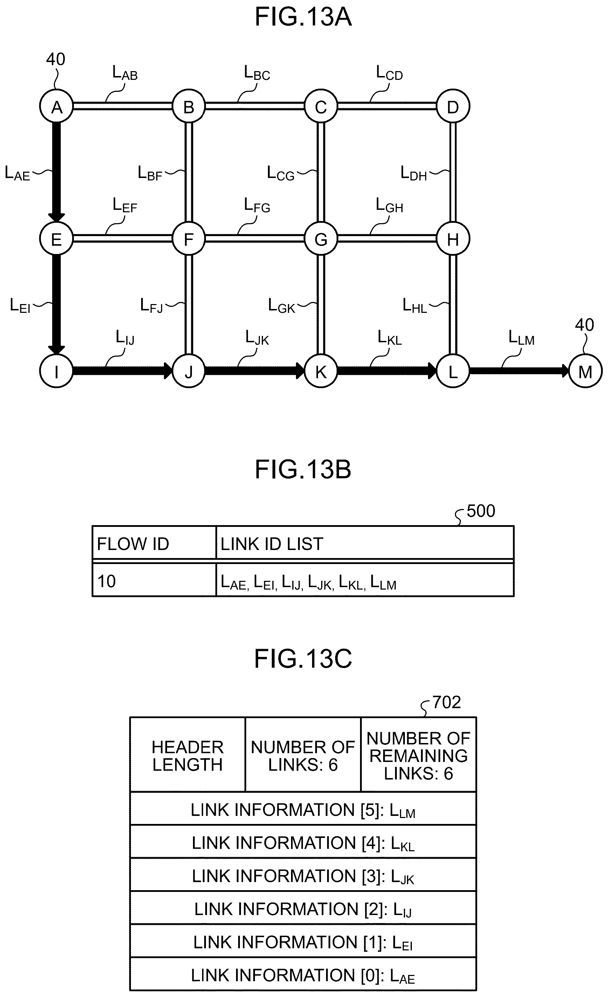

Next, with respect to the key generation of the "flow ID = 10" of Fig. 11 described above, a process when the path is changed to a path illustrated in Fig. 13A is performed in a case where the path illustrated in Fig. 12A is used will be described.

Since the path information 500 for the key relay of the "flow ID = 10" of Fig. 11 is recorded in the key management device 20 of the node 40 located at the start point and denoted by A, the key management device 20 of the node 40 located at the start point and denoted by A rewrites the path information 500.

Fig. 13A is a diagram illustrating a second example of the relay path for the global key used in the pair of applications 10 illustrated in Fig. 11. When the path is changed to the relay path illustrated in Fig. 13A, the path information 500 after the rewriting is path information illustrated in Fig. 13B.

Fig. 13B is a diagram illustrating an example of the path information 500 corresponding to the relay path illustrated in Fig. 13A. The path information 500 is reflected in the packet of the global key information 300 transmitted from the node 40 denoted by A, and the path control header 702 is as illustrated in Fig. 13C.

Fig. 13C is a diagram illustrating an example of the path control header 702 corresponding to the path information 500 illustrated in Fig. 13B. Thereafter, the packet is forwarded in the relay path illustrated in Fig. 13A in accordance with the content of the path control header 702.

Note that, in reality, it is not very conceivable that communication is completely unidirectional in a computer network in which communication of the application 10 is performed. This is because even in a case where data is transmitted in one direction, a reverse acknowledgment is required in most cases. In a case where bidirectional communication is required, a relay path is registered in the key management devices 20 of the nodes 40 at both ends of the communication.

Specifically, in the examples illustrated in Figs. 12A and 13A, the path from the node 40 denoted by A to the node 40 denoted by M is registered in the key management device 20 of the node 40 denoted by A. The path from the node 40 denoted by M to the node 40 denoted by A is registered in the key management device 20 of the node 40 denoted by M.

### Effects of Arrangement

As described above, in the key management device 20 according to the arrangement, the generation unit 203 generates a global key based on a random number. The packet processing unit 207 adds, to a packet including the global key, path information indicating a relay path for the packet. Then, the inter-node relay unit 209 encrypts the packet with a local key shared with another node and transmits the encrypted packet to the other node.

Therefore, according to the key management device 20 according to the arrangement, it is possible to more quickly and efficiently control the relay of the key (global key) to be used for encryption of communication between the applications 10 in the quantum cryptography communication system 1.

For example, the key management device 20 of the node 40 that relays a first packet refers to path information written in the packet by the key management device 20 of the node 40 at the start point in order to relay the first packet transmitted from another node 40. Therefore, the key management device 20 of the node 40 at the start point can independently control the relay path for the global key, and can quickly and efficiently perform the path control.

In addition, for example, a process of changing a path is taken as an example, and the process according to the present arrangement is compared with a method of routing according to a routing table set in each node (a general method that does not perform source routing) as follows.

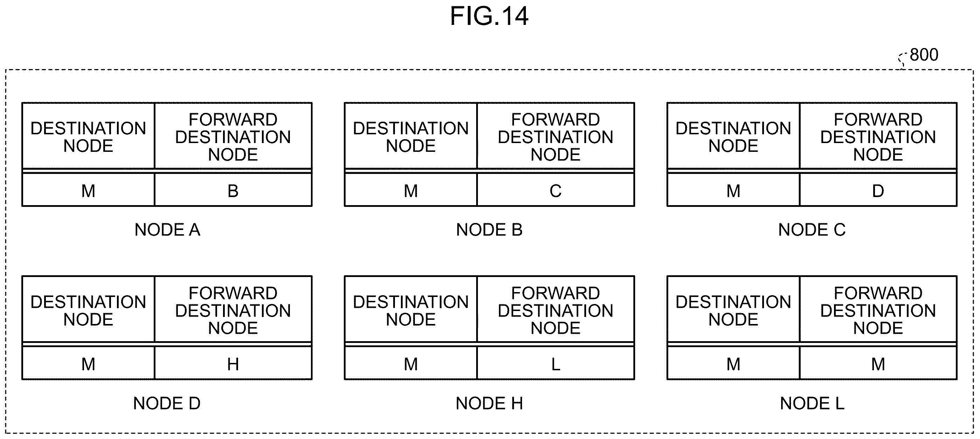

Fig. 14 is a diagram illustrating a routing table necessary for performing the key relay illustrated in Fig. 12A by a general method. Each routing table has a forward condition and a forward destination. A packet that meets the forward condition is forwarded to the forward destination. Although the destination node is set as the forward condition in Fig. 14, the same applies to a case where a flow ID is set as the forward condition or a QKD link is set as the forward destination, similarly to the present arrangement.

Here, when the conventional routing table illustrated in Fig. 14 is compared with the path information 500 illustrated in Fig. 12B according to the present arrangement, the present arrangement has two obvious advantages.

The first advantage is that the path information 500 is easily updated. Since the conventional routing table illustrated in Fig. 14 is set across nodes, it is necessary to make changes in a large number of nodes in order to update the routing table. On the other hand, it is only necessary to rewrite the path information 500 of the node 40 at the start point that is the path information 500 according to the present arrangement in Fig. 12B, that is, the node 40 denoted by A in Fig. 12A. In the example illustrated in Fig. 12B, since all information is included in one record, only one record is rewritten.

The second advantage is the visibility of the routing table. In the conventional routing table illustrated in Fig. 14, in order to know which path is actually used, it is necessary to collect the routing table of each node and assemble the path as a path from a start point to an end point. Therefore, as the number of nodes in the QKD network is increased, the routing table becomes less visible and less maintainable. On the other hand, it is only necessary to refer to the path information 500 of the node 40 at the start point that is the path information 500 according to the present arrangement in Fig. 12B, that is, the node 40 denoted by A, and the path from the start point to the end point is clear at a glance.

### First Modification of Arrangement

Next, a first modification of the arrangement will be described. In the description of the first modification, description similar to the description of the arrangement will be omitted, and portions different from the arrangement will be described. In the first modification, a case where priority control of packet communication is performed will be described.

A flow ID in the first modification is defined based on a pair of applications 10 and priority control information of packet communication.

For example, the priority control information includes a QoS policy such as a bandwidth priority prioritizing a magnitude of a communication data amount of a packet and a latency priority prioritizing a communication speed of the packet.

The allocation unit 206 according to the first modification allocates the flow ID to the global key further based on the priority control information. The packet processing unit 207 according to the first modification adds path information associated with the flow ID to the packet.

For example, it is assumed that two paths, a path A with a large delay and a path B with a small delay, are present between certain key management devices 20 in the key management network. In this case, in the flow information 400 illustrated in Fig. 5 or the path information 500 illustrated in Fig 6 described above, the bandwidth priority and the latency priority are defined in advance as the QoS policy. Specifically, the bandwidth priority is set for the flow ID corresponding to the path A, and the latency priority is set for the flow ID corresponding to the path B.

The allocation unit 206 allocates the flow ID to the global key according to the setting of the QoS policy for the process of sharing the global key. Specifically, for example, in a case where the setting of the QoS policy for the process of sharing the global key is the latency priority (that is, in a case where the time required for sharing the global key is most prioritized), a flow ID of "QoS policy = latency priority" is allocated to the global key. As a result, the packet including the global key is relayed using the path B.

In addition, for example, in a case where the setting of the QoS policy for the process of sharing the global key is the bandwidth priority (that is, in a case where a quantity by which the global key is shared is most prioritized), a flow ID of "QoS policy = bandwidth priority" is allocated to the global key. As a result, the packet including the global key is relayed using the path A.

According to the first modification, traffic at the time of sharing the global key can be optimized.

### Second Modification of Arrangement

Next, a second modification of the arrangement will be described. In the description of the second modification, description similar to the description of the arrangement will be omitted, and portions different from the arrangement will be described. In the second modification, a case where the global key is divided into a plurality of blocks and relayed by using a plurality of packets will be described.

In the second modification, a plurality of flow IDs and path information are defined for each of the blocks in the path information storage unit 202 of the node 40 at the start point. In the flow information storage unit 205 of the node 40 at the start point, a flow ID of a pair of applications 10 is defined for each of the blocks.

The generation unit 203 according to the second modification divides the global key into a plurality of blocks. Then, the allocation unit 206 according to the second modification allocates a flow ID to each of the blocks.

According to the second modification, it is possible to transmit each of the blocks of the global key through different paths. As a result, effects such as improvement of confidentiality of the global key and load distribution of the process of relaying a packet can be obtained.

### Third Modification of Arrangement

Next, a third modification of the arrangement will be described. In the description of the third modification, description similar to the description of the arrangement will be omitted, and portions different from the arrangement will be described. In a third modification, a control example in which an alternative path can be selected at the time of a failure of a relay path or the like will be described.

The allocation unit 206 according to the third modification allocates a plurality of flow IDs and priority to the global key. The packet processing unit 207 according to the third modification adds a plurality of pieces of path information associated with the plurality of flow IDs to a packet.

Upon receiving, from another node 40, an encrypted packet including the global key, a plurality of pieces of path information, the priority of the plurality of pieces of path information, the inter-node relay unit 209 according to the third modification decrypts the second packet with the local key. The intra-node relay unit 210 according to the third modification determines a forward destination of the packet from the plurality of pieces of path information based on the priority and the state of the relay path.

For example, the intra-node relay unit 210 according to the third modification sequentially selects path information with a high priority. When a selected path is disconnected due to a network failure, the intra-node relay unit 210 according to the third modification selects a path with the next highest priority.

According to the third modification, since the packet includes the plurality of pieces of path information and the priority of the plurality of pieces of path information, for example, it is possible to perform control to use an alternative path when a path fails. Specifically, when a network failure occurs in a part of a shared path for the global key, switching to an alternative path is possible. Note that the network failure is detected, for example, by the node 40 adjacent to the failed location, and is notified to the key management device 20 of the node 40 that relays the packet.

Lastly, an example of a hardware configuration of the key management device 20 according to the arrangement will be described. Note that a main configuration of hardware of the information processing apparatus in which the application 10 operates and a main configuration of hardware of the QKD device 30 are similar to the hardware configuration of the key management device 20.

### Example of Hardware Configuration

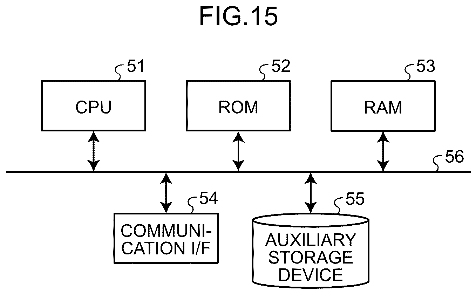

Fig. 15 is a diagram illustrating the example of the hardware configuration of the key management device 20 according to the arrangement. The key management device 20 includes a central processing unit (CPU) 51, a read only memory (ROM) 52, a random access memory (RAM) 53, a communication I/F 54, and an auxiliary storage device 55. The CPU 51, the ROM 52, the RAM 53, the communication I/F 54, and the auxiliary storage device 55 are connected via a bus 56.

The CPU 51 (an example of a processor) executes a program read from the ROM 52 (an example of a main storage device), the auxiliary storage device 55, or the like to the RAM 53. The auxiliary storage device 55 is a hard disk drive (HDD), a memory card, or the like.

Note that the key management device 20 may further include a display device that displays the state and the like of the key management device 20, an input device that receives an input from a user, and the like.

The communication I/F 54 is a communication interface for communicating with the application 10, another key management device 20, the QKD device 30, and the like.

The program that is executed by the key management device 20 is a file in an installable format or an executable format, is stored in a computer-readable storage medium such as a CD-ROM, a memory card, a CD-R, and a digital versatile disc (DVD), and is provided as a computer program product.

In addition, the program that is executed by the key management device 20 may be stored on a computer connected to a network such as the Internet and provided by being downloaded via the network.

In addition, the program that is executed by the key management device 20 may be provided via a network such as the Internet without being downloaded.

In addition, the program that is executed by the key management device 20 may be embedded in the ROM or the like and provided.

The program that is executed by the key management device 20 is a module configuration that is included in the above-described functional configuration of the key management device 20 and includes a function implementable by the program. The function implemented by the program is loaded to the RAM 53 by the CPU 51 reading and executing the program from a storage medium such as the auxiliary storage device 55. That is, the function implemented by the program is generated on the RAM53.

Note that some or all of the functions of the key management device 20 may be implemented by hardware such as an integrated circuit (IC). The IC is, for example, a processor that executes dedicated processing.

In addition, in a case where each of the functions is implemented by using a plurality of processors, each of the processors may implement one of the functions or may implement two or more of the functions.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

Example 1. A key management device including:
a generation unit configured to generate a first global key based on a first random number;
a packet processing unit configured to add, to a first packet including the first global key, first path information indicating a relay path for the first packet; and
an inter-node relay unit configure to encrypt the first packet with a local key shared with a different node and transmit the encrypted first packet to the different node.

Example 2. The key management device according to Example 1, wherein
when receiving, from the different node, an encrypted second packet including a second global key based on a second random number and second path information indicating a relay path for the second packet, the inter-node relay unit is configured to decrypt the second packet with the local key, and
the key management device further includes an intra-node relay unit configure to identify a forward destination of the second packet from the second path information.

Example 3. The key management device according to Example 2, wherein
the generation unit is configured to store the first global key in a storage device, and
the intra-node relay unit is configured to store the second global key in the storage device when identifying that the destination of the second packet is its own device based on the second path information.

Example 4. The key management device according to Example 2, wherein
when receiving, from the different node, an encrypted second packet including the second global key, a plurality of pieces of the second path information, and priority of the plurality of pieces of second path information, the inter-node relay unit is configured to decrypt the second packet with the local key, and
the intra-node relay unit is configured to determine a forward destination of the second packet from the plurality of pieces of the second path information based on the priority and a state of the relay path for the second packet.

Example 5. The key management device according to any one of Examples 1 to 4, wherein
the local key is shared with the different node by quantum key distribution (QKD), and
the packet processing unit is configured to add the first path information based on order information of a QKD link used for QKD.

Example 6. The key management device according to any one of Examples 1 to 4, further including an allocation unit configured to allocate flow identification information for identifying a flow of communication of the first packet to the first global key for each pair of applications configured to use the first global key for data encryption or decryption, wherein
the packet processing unit is configured to add the first path information associated with the flow identification information to the first packet.

Example 7. The key management device according to Example 6, wherein
the flow identification information is defined based on the pair of applications and priority control information of communication of the first packet, and
the allocation unit is configured to allocate the flow identification information to the first global key further based on the priority control information.

Example 8. The key management device according to Example 7, wherein
the priority control information includes at least a bandwidth priority prioritizing a magnitude of a communication data amount of the first packet and a latency priority prioritizing a communication speed of the first packet.

Example 9. The key management device according to Example 6, wherein
the generation unit is configured to divide the first global key into a plurality of blocks, and
the allocation unit is configured to allocate the flow identification information for each of the blocks.

Example 10. The key management device according to Example 6, wherein
the allocation unit is configured to allocate a plurality of pieces of the flow identification information to the first global key along with priority, and
the packet processing unit is configured to add a plurality of pieces of the first path information associated with the plurality of pieces of the flow identification information to the first packet.

Example 11. A quantum cryptography communication system including a plurality of nodes each including a QKD device and a key management device, wherein
the QKD device is configured to provide a local key shared with a different node by quantum key distribution (QKD), to the key management device, and
the key management device includes:
   a generation unit configured to generate a first global key based on a first random number;
   a packet processing unit configured to add, to a first packet including the first global key, first path information indicating a relay path for the first packet; and
   an inter-node relay unit configured to encrypt the first packet with the local key and transmit the encrypted first packet to the different node.

Example 12. A key management method including:
by a key management device, generating a first global key based on a first random number;
by the key management device, adding, to a first packet including the first global key, first path information indicating a relay path for the first packet; and
by the key management device, encrypting the first packet with a local key shared with a different node and transmit the encrypted first packet to the different node.

Example 13. A computer-readable medium including programmed instructions, the instructions causing a computer to execute:
generating a first global key based on a first random number;
adding, to a first packet including the first global key, first path information indicating a relay path for the first packet; and
encrypting the first packet with a local key shared with a different node and transmits the encrypted first packet to the different node.

## Claims

1. A key management device (20) comprising:
a generation unit (203) configured to generate a first global key based on a first random number;
a packet processing unit (207) configured to add, to a first packet including the first global key, first path information indicating a relay path for the first packet; and
an inter-node relay unit (209) configure to encrypt the first packet with a local key shared with a different node and transmit the encrypted first packet to the different node.

2. The key management device (20) according to claim 1, wherein
when receiving, from the different node, an encrypted second packet including a second global key based on a second random number and second path information indicating a relay path for the second packet, the inter-node relay unit (209) is configured to decrypt the second packet with the local key, and
the key management device (20) further comprises an intra-node relay unit (210) configure to identify a forward destination of the second packet from the second path information.

3. The key management device (20) according to claim 2, wherein
the generation unit (203) is configured to store the first global key in a storage device, and
the intra-node relay unit (210) is configured to store the second global key in the storage device when identifying that the destination of the second packet is its own device based on the second path information.

4. The key management device (20) according to claim 2, wherein
when receiving, from the different node, an encrypted second packet including the second global key, a plurality of pieces of the second path information, and priority of the plurality of pieces of second path information, the inter-node relay unit (209) is configured to decrypt the second packet with the local key, and
the intra-node relay unit (210) is configured to determine a forward destination of the second packet from the plurality of pieces of the second path information based on the priority and a state of the relay path for the second packet.

5. The key management device (20) according to any one of claims 1 to 4, wherein
the local key is shared with the different node by quantum key distribution (QKD), and
the packet processing unit (207) is configured to add the first path information based on order information of a QKD link used for QKD.

6. The key management device (20) according to any one of claims 1 to 4, further comprising an allocation unit (206) configured to allocate flow identification information for identifying a flow of communication of the first packet to the first global key for each pair of applications configured to use the first global key for data encryption or decryption, wherein
the packet processing unit (207) is configured to add the first path information associated with the flow identification information to the first packet.

7. The key management device (20) according to claim 6, wherein
the flow identification information is defined based on the pair of applications and priority control information of communication of the first packet, and
the allocation unit (206) is configured to allocate the flow identification information to the first global key further based on the priority control information.

8. The key management device (20) according to claim 7, wherein
the priority control information includes at least a bandwidth priority prioritizing a magnitude of a communication data amount of the first packet and a latency priority prioritizing a communication speed of the first packet.

9. The key management device (20) according to claim 6, wherein
the generation unit (203) is configured to divide the first global key into a plurality of blocks, and
the allocation unit (206) is configured to allocate the flow identification information for each of the blocks.

10. The key management device (20) according to claim 6, wherein
the allocation unit (206) is configured to allocate a plurality of pieces of the flow identification information to the first global key along with priority, and
the packet processing unit (207) is configured to add a plurality of pieces of the first path information associated with the plurality of pieces of the flow identification information to the first packet.

11. A quantum cryptography communication system (1) comprising a plurality of nodes each including a QKD device (30) and a key management device (20), wherein
the QKD device (30) is configured to provide a local key shared with a different node by quantum key distribution (QKD), to the key management device (20), and
the key management device (20) comprises:
a generation unit (203) configured to generate a first global key based on a first random number;
a packet processing unit (207) configured to add, to a first packet including the first global key, first path information indicating a relay path for the first packet; and
an inter-node relay unit (209) configured to encrypt the first packet with the local key and transmit the encrypted first packet to the different node.

12. A key management method comprising:
by a key management device (20), generating a first global key based on a first random number;
by the key management device (20), adding, to a first packet including the first global key, first path information indicating a relay path for the first packet; and
by the key management device (20), encrypting the first packet with a local key shared with a different node and transmit the encrypted first packet to the different node.

13. A computer-readable medium including programmed instructions, the instructions causing a computer to execute:
generating a first global key based on a first random number;
adding, to a first packet including the first global key, first path information indicating a relay path for the first packet; and
encrypting the first packet with a local key shared with a different node and transmits the encrypted first packet to the different node.
